(19) Europäisches Patentamt
European Patent Office
Office européen des brevets

(11) Veröffentlichungsnummer : **0 114 574 B1**

(12) # EUROPÄISCHE PATENTSCHRIFT

(45) Veröffentlichungstag der Patentschrift : **19.07.89**

(51) Int. Cl.$^4$ : **C 09 B 67/34**, C 09 B 67/22, D 06 P 1/41

(21) Anmeldenummer : **83810607.8**

(22) Anmeldetag : **21.12.83**

(54) **Flüssige Handelsform von kationischen Farbstoffen.**

(30) Priorität : **28.12.82 CH 7587/82**

(43) Veröffentlichungstag der Anmeldung : **01.08.84 Patentblatt 84/31**

(45) Bekanntmachung des Hinweises auf die Patenterteilung : **19.07.89 Patentblatt 89/29**

(84) Benannte Vertragsstaaten : **BE CH DE FR GB LI**

(56) Entgegenhaltungen :
**EP-A- 0 056 947**
**FR-A- 1 583 043**
**FR-A- 2 231 808**
**GB-A- 2 006 275**
**Die Akte enthält technische Angaben, die nach dem Eingang der Anmeldung eingereicht wurden und die nicht in dieser Patentschrift enthalten sind.**

(73) Patentinhaber : **CIBA-GEIGY AG**
**Klybeckstrasse 141**
**CH-4002 Basel (CH)**

(72) Erfinder : **Läpple, Arnulf Ruediger**
**Sägeweg 18**
**CH-4147 Aesch (CH)**
Erfinder : **Nicopoulos, Alex**
**Grellingerstrasse 13**
**CH-4052 Basel (CH)**

**EP 0 114 574 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft eine flüssige Handelsform von kationischen Farbstoffen, Verfahren zu deren Herstellung sowie deren Verwendung zum Färben und Bedrucken von vor allem Polyacrylnitrilmaterialien.

Schwarze Mischungen von kationischen Farbstoffen sind bekannt. Diese enthalten zur Einstellung ihrer Farbtöne vor allem basische Farbstoffe u. a. Malachitgrün und/oder Fuchsin, sowie gegebenenfalls noch Chrysoidin und/oder Auramin. Nachteil derartiger Mischungen ist u. a. dass sich die einzelnen Komponenten in der Mischung gegenseitig negativ beeinflussen können indem Ausfällungen möglich sind.

Aus der EP-Anmeldung 56 947 sind feste Farbstoffmischungen von drei kationischen Farbstoffen bekannt, die zum Schwarzfärben von sauer modifizierten Synthesefasern verwendet werden können. Die Nachteile von festen Handelsformen (z. B. Stäuben beim Abwiegen, zeitaufwendiger Löseprozess) sind allgemein bekannt. Die Farbstoffmischungen enthalten stets einen blauen Naphtholactamfarbstoff und es gibt keinerlei Hinweis, dass man stattdessen spezifische andere blaue Farbstoffe verwenden kann.

Es wurde nun eine flüssige Handelsform von kationischen Farbstoffen gefunden, die in ihrer bevorzugten Ausführungsform eine Mischung von drei kationischen Azo- bzw. Hydrazonfarbstoffen enthält, welche überraschenderweise die oben genannten Nachteile nicht aufweist indem sie u. a. stabil bleibt und wobei sich die Einzelfarbstoffe des Gemisches gegenseitig nicht beeinflussen z. B. durch ausfällen und welche zum Färben von sauer modifizierten Synthesefasern verwendet werden kann. Zudem ist es von Vorteil, die flüssige Handelsform direkt dem Färbebad zuzugeben.

Die Erfindung betrifft somit eine neue, flüssige Handelsform von kationischen Farbstoffen, enthaltend neben den kationischen Farbstoffen eine aliphatische Carbonsäure, gegebenenfalls Wasser, organische Lösungsmittel und Zusätze, dadurch gekennzeichnet, dass diese als kationische Farbstoffe eine Mischung von mindestens einer kationischen Gelbkomponente der Formeln

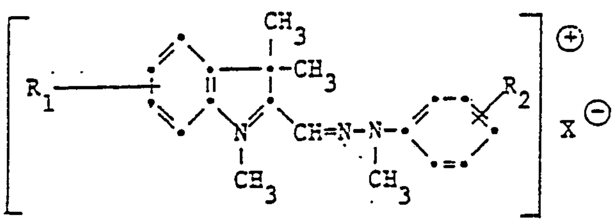

(I)

und/oder

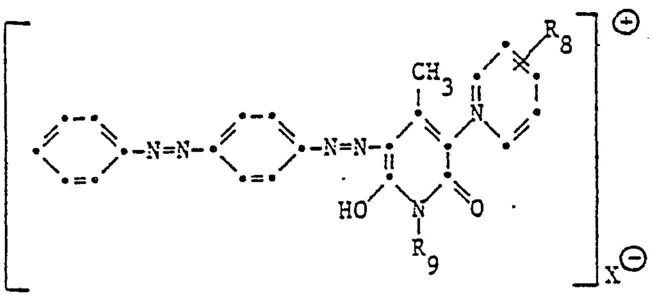

(Ia)

mindestens einer kationischen Rotkomponente der Formeln

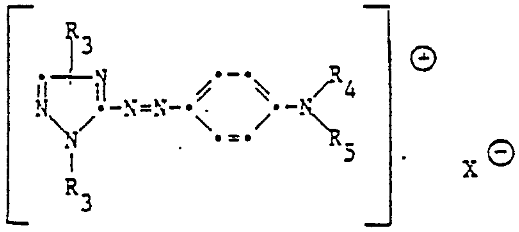

(II)

und/oder

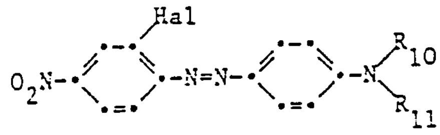

(IIa)

und mindestens einer kationischen Blaukomponente der Formeln

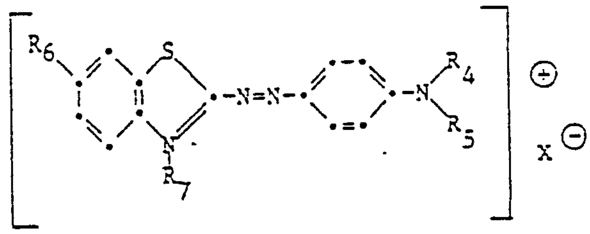

(III)

und/oder

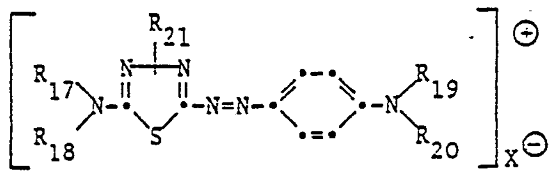

(IIIb)

enthält, in welchen Formeln bedeuten :

$R_1$ und $R_2$ unabhängig voneinander Wasserstoff, Halogen, $C_1$-$C_4$-Alkyl oder $C_1$-$C_4$-Alkoxy,
$R_3$ $C_1$-$C_4$-Alkyl,
$R_4$ und $R_5$ unabhängig voneinander gegebenenfalls substituiertes $C_1$-$C_4$-Alkyl,
$R_6$ $C_1$-$C_4$-Alkoxy und Acylamino,
$R_7$ $C_1$-$C_4$-Alkyl,
$R_8$ Wasserstoff und Methyl,
$R_9$ Wasserstoff, gegebenenfalls substituiertes $C_1$-$C_6$-Alkyl, Phenyl und Cyclohexyl,
Hal Chlor und Brom,
$R_{10}$ $C_1$-$C_4$-Alkyl,
$R_{11}$ einen Rest der Formeln

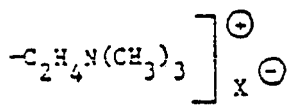

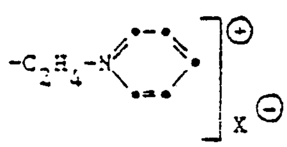

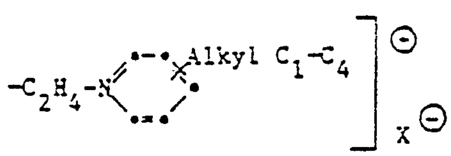

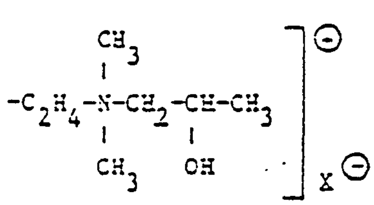

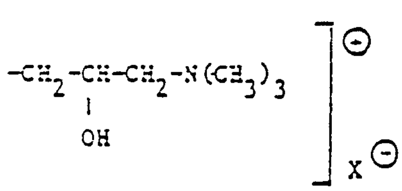

$R_{17}$, $R_{18}$, $R_{19}$ und $R_{20}$ unabhängig voneinander gegebenenfalls substituiertes $C_1$-$C_6$-Alkyl oder $R_{17}$ bildet mit $R_{18}$ unter Einschluss der N-Atoms und gegebenenfalls weiterer Heteroatome einen heterocyclischen 5- oder 6-Ring,

$R_{21}$ gegebenenfalls substituiertes $C_1$-$C_3$-Alkyl und
X einen anionischen Rest.

Die Farbstoffe der genannten Formeln sind bekannt.

Eine bevorzugte flüssige Handelsform enthält beispielsweise gesamthaft 20-30 Gew.-% an kationischen Farbstoffen, wobei sich diese zusammensetzt aus insbesondere 10-12 Gew.-% der Gelbkomponente(n), 4-6 Gew.-% der Rotkomponente(n) und 6-12 Gew.-% der Blaukomponente(n).

$R_1$ und $R_2$ in der Bedeutung von Halogen stellen beispielsweise das Fluor-, Chlor- oder Bromatom dar.

Bedeuten $R_1$, $R_2$, $R_3$, $R_4$, $R_5$, $R_6$, $R_7$, $R_9$, $R_{10}$, $R_{19}$ und $R_{20}$ eine $C_1$-$C_4$-Alkyl- bzw. $C_1$-$C_6$-Alkyl- bzw. $C_1$-$C_4$-Alkoxygruppe, so handelt es sich um unverzweigte oder verzweigte Gruppen wie beispielsweise um die Methyl-, Aethyl-, n-Propyl, n-Butyl-, iso-Butyl-, tert.-Butyl-, Methoxy-, Aethoxy-, n-Propoxy- oder iso-Butoxygruppe. Im Falle von $R_4$, $R_5$, $R_9$, $R_{19}$ und $R_{20}$ kann die $C_1$-$C_4$- bzw. $C_1$-$C_6$-Alkylgruppe noch substituiert sein ; als Substituenten kommen beispielsweise die Hydroxyl- und Phenylgruppe in Frage.

Bilden $R_{17}$ und $R_{18}$ zusammen einen Heterocyclus so kommt vor allem ein Morpholin und ein Piperazinring in Frage.

In diesem Zusammenhang ergeben sich für $R_4$ und $R_5$ folgende vorteilhafte Kombinationen : $R_4$ unsubstituiertes $C_1$-$C_4$-Alkyl und $R_5$ substituiertes $C_1$-$C_4$-Alkyl sowie $R_4$ und $R_5$ substituiertes $C_1$-$C_4$-Alkyl.

Bedeutet $R_6$ eine Acylaminogruppe, so kann es sich um eine Benzoylaminogruppe oder vorzugsweise um eine Acetylaminogruppe handeln.

Ist der $C_1$-$C_3$-Alkylrest gemäss $R_{21}$ substituiert, so kommt als Substituent vorallem OH in Frage.

Bevorzugte Handelsformen enthalten als Gelbkomponente einen Farbstoff der Formel I, worin bedeuten : $R_1$ Wasserstoff, $R_2$ eine $C_1$-$C_4$-Alkoxygruppe, und X einen anionischen Rest ; als Rotkomponente einen Farbstoff der Formel II, worin bedeuten : $R_3$ die Methylgruppe, $R_4$ die Methyl- oder Aethylgruppe, $R_5$ eine durch Phenyl substituierte Methyl- oder Aethylgruppe und X einen anionischen Rest ; und als Blaukomponente einen Farbstoff der Formel III, worin bedeuten : $R_4$ die Methyl- oder Aethylgruppe, $R_5$ eine durch Hydroxyl substituierte Methyl-, Aethyl- oder Propylgruppe, $R_6$ die Methoxygruppe, $R_7$ die Methyl- oder Aethylgruppe und X ein Anion.

Als Anionen X kommen sowohl anorganische wie organische Anionen in Frage ; beispielsweise sind genannt : Halogen, wie Fluorid-, Chlorid-, Bromid- oder Jodid-, Bortetrafluorid, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoation oder komplexe Anionen wie das von Chlorzinkdoppelsalzen.

Bevorzugte Anionen X sind das Acetat-, Methylsulfat-, Lactat- und Formiat-Ion.

In den neuen Handelsformen kann der Gelb-, Rot- bzw. Blaufarbstoff jeweils aus einer einzigen Komponente oder aber auch aus einer Mischung von Komponenten gleicher oder ähnlicher Nuance bestehen. Besteht der Farbstoff aus einer Mischung von Komponenten, so bringt dies den Vorteil mit sich, dass gewisse Eigenschaften eines Farbstoffes durch Zugabe eines weiteren Farbstoffes gleicher oder ähnlicher Farbnuance variiert werden können.

Die neuen flüssigen Handelsformen enthalten ausser der definitionsgemässen Farbstoffmischung aliphatische gesättigte und ungesättigte Mono- oder Dicarbonsäuren ; diese müssen befähigt sein die definitionsgemässe Farbstoffmischung in Lösung zu halten. Beispielsweise sind genannt : Ameisensäure, Essigsäure, Propionsäure, Milchsäure, Oelsäure, Linolsäure, Oxalsäure, Weinsäure und Malonsäure. Bevorzugte Säuren sind die Milchsäure und vor allem die Essigsäure.

Diese Carbonsäuren sind vorzugsweise zu 10-30 Gew.-%, insbesondere 12-25 Gew.-% in der Flüssigformulierung vorhanden.

Darüber hinaus können die neuen flüssigen Handelsformen noch Wasser oder eine Mischung von Wasser und wasserlöslichen organischen Lösungsmittel oder nur organische Lösungsmittel enthalten. Als organische Lösungsmittel kommen in diesem Zusammenhang beispielsweise in Frage : Glykole wie Aethylenglykol, Diäthylenglykol oder Triäthylenglykol ; Glykoläther wie Aethylenglykolmonomethyläther, Aethylenglykolmonoäthyläther, Diäthylenglykolmonomethyläther, Diäthylenglykolmonoäthyläther, Diäthylenglykolmono-n-butyläther, dann Dimethylsulfoxid, N-Methylpyrrolidon, Dimethylformamid-, Tetramethylharnstoff, δ-Caprolactam und Benzylalkohol.

Ferner können die neuen flüssigen Handelsformen noch weitere übliche Zusätze wie Emulgatoren, Dispergier-, Egalisier- und/oder Netzmittel enthalten.

Die neuen Farbstoffhandelsformen stellen stabile Flüssigformulierungen dar, die sowohl lagerstabil (min. 6 Monate als echte Lösung vorliegend, ohne dass eine Sedimentation erfolgt) als auch temperaturstabil (von ca. 0° bis 30 °C) sind ; sie sind an Farbstoff hochkonzentriert, sehr dünnflüssig, daher gut giessbar und gelieren nicht.

Die Herstellung der neuen flüssigen Farbstoffhandelsformen erfolgt beispielsweise derart, dass man aliphatische Carbonsäuren enthaltende salzarme gegebenenfalls wässerige Lösungen der Gelb-, Rot- und Blaukomponente(n) bei Raumtemperatur miteinander verrührt und gegebenenfalls die weiteren Zusätze und/oder organischen Lösungsmittel vor, während oder nach dem Verrühren zugibt.

Die neuen flüssigen Farbstoffhandelsformen sind auch ohne Verdünnung direkt gebrauchsfähig und

können verwendet werden zum Färben und Bedrucken von Textilmaterialien, welche mit kationischen Farbstoffen färbbar sind, insbesondere Textilmaterialien, die z. B. vorteilhaft aus Homo- oder Mischpolymerisaten des Acrylnitrils bestehen oder Polyester, welches durch saure Gruppen modifiziert ist. Man färbt vorzugsweise in wässerigem, schwach saurem Medium nach dem Auszieverfahren oder im Pad-Steam-Verfahren. Das Textilmaterial kann dabei in verschiedenartigster Aufmachungsform vorliegen, beispielsweise als Spinnkabel, Kammzug, lose Faser, Garn, Faden, Gewebe, Gewirke, Stückware und Fertigware wie Hemden oder Pullover.

Darüber hinaus können die neuen Flüssigformulierungen noch zum Färben von Polyacrylnitril-Nasskabel verwendet werden, ebenso wie zum Färben des Polyacrylnitril-Anteils in Mischgeweben, z. B. Mischgewebe aus Polyacrylnitril/Cellulose, Polyacrylnitril/Wolle, Polyacrylnitril/Polyamid, Polyacrylnitril/Polyester und Polyacrylnitril/sauer färbbares Polyacrylnitril.

Ein weiterer Vorteil der neuen flüssigen Handelsform besteht darin, dass man diese als Füllkomponente verwenden kann ; sie ist mit flüssigen und pulverförmigen kationischen Buntfarbstoffen kombinierbar und kann so als Nuancierkomponente eingesetzt werden. Damit besteht eine neue Möglichkeit gedeckte Nuancen auf Polyacrylnitril wirtschaftlich zu erstellen. So kann beispielsweise jede Flüssigformulierung enthaltend die Einzelfarbstoffe I, II oder III der erfindungsgemässen Flüssigformulierung mit der neuen flüssigen Handelsform, enthaltend z. B. die Mischung der Farbstoffe I, II und III nuanciert werden. Wird beispielsweise die Flüssigformulierung enthaltend alleinig den gelben Farbstoff I mit der neuen Handelsform nuanciert, so kann man die verschiedensten Olive-Töne erhalten ; wird die Flüssigformulierung enthaltend alleinig den roten Farbstoff II mit der neuen Handelsform nuanciert, so kann man die verschiedensten Rubin- bis Bordeaux-Töne erhalten und wird die Flüssigformulierung enthaltend alleinig den blauen Farbstoff III mit der neuen Handelsform nuanciert, so kann man die verschiedensten Blau-Töne erhalten.

Die mit diesen neuen Flüssigformulierungen gefärbten Textilmaterialien weisen sehr gute Eigenschaften und Gebrauchsechtheiten auf. Genannt sind in diesem Zusammenhang vor allem die neutrale Nuance, der geringe Kunstlichtumschlag, die hohe Lichtechtheit in allen Farbtiefen (von hellem Grau bis tiefen Schwarz) und das gute Aufbauvermögen.

Die folgenden Beispiele veranschaulichen die Erfindung ohne sie darauf zu limitieren. Teile (T) bedeuten Gewichtsteile und die Temperaturen sind in Grad Celsius angegeben.

Beispiel 1 : Eine Flüssigformulierung wird wie folgt hergestellt :
In einem 600 ml Becherglas werden nacheinander vorgelegt :
300,0 g der Flüssigformulierung A
111,5 g der Flüssigformulierung B und
60,0 g der Flüssigformulierung C.

Das Gemisch wird sodann mittels Magnetrührer während einer Stunde bei Raumtemperatur homogenisiert. (pH = ca. 3,3). Nun wird 2,5 g eines Emulgators (Basis Fettalkoholpolyglykoläther) zugegeben und eine weitere Stunde verrührt.

Die erhaltene Farbstofflösung wird mit ca. 27 g Wasser auf 500 g gestellt. Anschliessend wird klärfiltriert ; man erhält eine schwarze Flüssigformulierung die folgende Zusammensetzung aufweist :

8,7 Teile Farbstoff der Formel

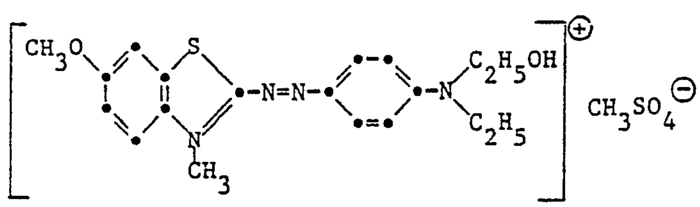

11,4 Teile Farbstoff der Formel

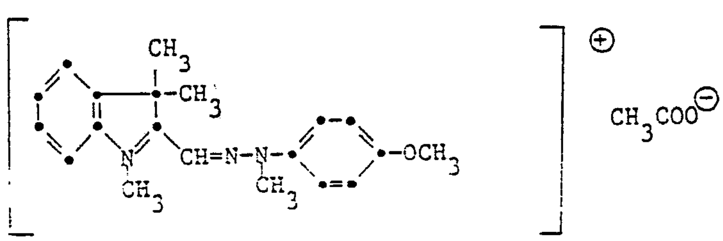

4,7 Teile Farbstoff der Formel

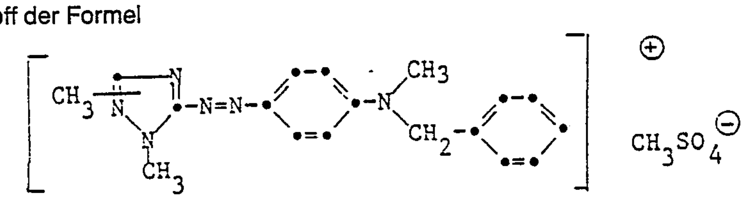

19,0 Teile Essigsäure
55,1 Teile Wasser und
1,1 Teile Fettalkoholpolyglykoläther

100 Teile

Flüssigformulierung A

14,5 Gew.-% des Farbstoffs der Formel

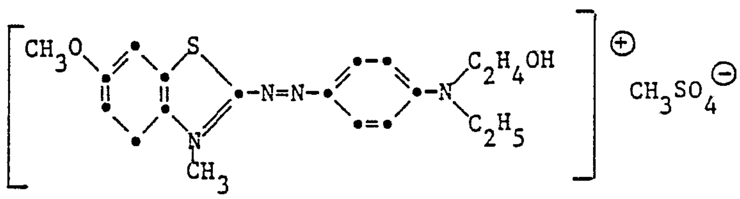

15,0 Gew.-% Essigsäure
1,0 Gew.-% Magnesium Hydrogen-Methylsulfat
1,2 Gew.-% Natriumacetat
1,0 Gew.-% Fettalkoholpolyglykoläther
67,3 Gew.-% Wasser

100.0 Gew.-%

Flüssigformulierung B

Enthaltend den Farbstoff der Formel

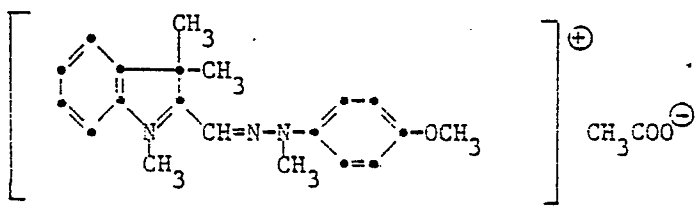

Essigsäure und Wasser.

Flüssigformulierung C

40,0 Gew.-% des Farbstoffes der Formel

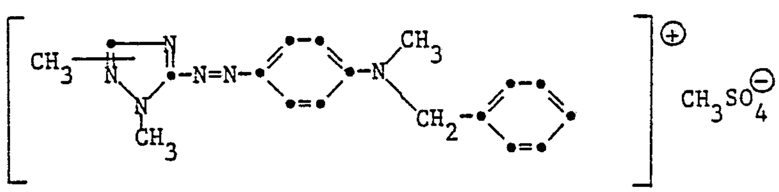

28,5 Gew.-% Wasser
1,5 Gew.-% $Na_2SO_4$
30,0 Gew.-% Erssigsäure

100.0 Gew.-%

Beispiel 2: 83 kg kontinuierlich vorgebauschtes Euroacril (Polyacrylnitril) Hochbauschgarn werden als Wickelkörper beim Flottenverhältnis 1 : 15 auf einem Henriksen-Zirkulationsfärbeapparat gefärbt. Die wässerige Färbeflotte enthält 0,5 % einer wässerigen Lösung eines Alkylphenoläthoxylates, 1 % Natriumazetat krist. und 4 % (= 3 320 g) einer flüssigen Handelsform gemäss Beispiel 1. Mit Essigsäure wird ein pH-Wert von 4-4,5 eingestellt. Bei 70° wird mit der Ware eingefahren und während 5 Min. mit der Flottenzirkulation von innen nach aussen behandelt. Anschliessend erhitzt man innerhalb von 30 Min. auf 100° und färbt während 60 Min. bei dieser Temperatur. Dann wird bis auf 50° abgekühlt, gespült, zentrifugiert und getrocknet. Man erhält ein egal gefärbtes, tiefschwarzes Euroacril-Garn.

Beispiel 3 : 105 kg Dralon (Polyacrylnitril) Webgarn auf Kreuzspulen werden in einem Then-Kreuzspulfärbeapparat, enthaltend eine wässerige Färbeflotte (ca. 1 200 l) mit 0,5 % einer wässerigen Lösung eines Alkylphenoläthoxylates, 1 % Natriumazetat krist., 5 % Glaubersalz kalz. und 1 % (= 1 050 g) einer flüssigen Handelsform gemäss Beispiel 1 sowie 1 % einer wässerigen Lösung von Dodecyldimethylbenzylammoniumchlorid gefärbt. Mit Essigsäure wird ein pH-Wert von 4-4,5 eingestellt. Bei 75° wird mit dem Garn eingefahren und 5 Min. mit der Flottenzirkulation von innen nach aussen behandelt. Dann erhitzt man innerhalb von 45 Min. auf 100° und färbt während 60 Min. bei dieser Temperatur. Anschliessend kühlt man ab, spült, schleudert und trocknet. Man erhält ein egal gefärbtes, neutral-graues Dralon Garn, das sich durch eine hervorragende, mit üblichen Schwarzmarken nicht zu erzielende Lichtechtheit auszeichnet.

Beispiel 4 : 62 kg Dolan (Polyacrylnitril) Webgarn auf Kreuzspulen werden gefärbt in einem Scholl-Kreuzspulfärbeapparat, enthaltend eine wässerige Färbeflotte (ca. 750 l) mit 0,5 % einer wässerigen Lösung eines Alkylphenoläthoxylates, 1 % Natriumazetat krist. und 620 g einer Farbstoffmischung bestehend aus 496 g des Farbstoffes der Formel

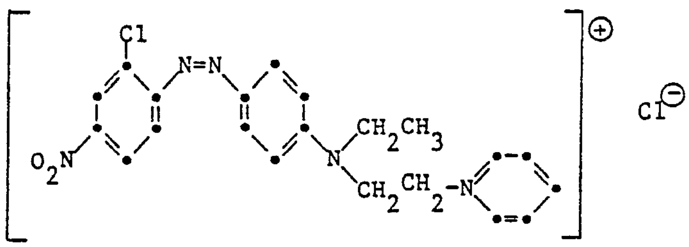

in flüssiger Handelsform und 124 g einer flüssigen Handelsform gemäss Beispiel 1, sowie 1 % einer wässerigen Lösung von Dodecyldimethylbenzylammoniumchlorid. Mit Essigsäure wird ein pH-Wert von 4-4,5 eingestellt. Das Garn wird bei 75° eingefahren und 10 Min. bei dieser Temperatur und einer Flottenzirkulation von innen nach aussen behandelt. Anschliessend erhitzt man innerhalb von 45 Min. auf 100° und färbt während 60 Min. bei dieser Temperatur. Dann kühlt man ab, spült, schleudert und trocknet. Man erhält ein egal gefärbtes, braunes Dolan-Garn, das sich durch eine hohe Lichtechtheit auszeichnet.

Beispiel 5 : 1 500 kg Cashmilon (Polyacrylnitril) Spinnkabel werden nach dem Pad-Steam-Verfahren kontinuierlich gefärbt, wobei das Kabel zunächst auf einem Foulard mit einer wässerigen Klotzflotte von 30° imprägniert wird, die pro Liter folgende Zusammensetzung enthält :

6 g eines säurebeständigen Verdickungsmittels (Typ Kernmehlderivat)
20 g Kokosfettsäurediäthanolamid
0,05 g Entschäumer
40 g flüssiger Handelsform gemäss Beispiel 1.

Mit Weinsäure wird ein pH-Wert von 4-4,5 eingestellt. Die Flottenaufnahme beträgt 100 %. Dann wird auf einem Ilma-Dämpfer während 45 Min. mit Sattdampf von 100-102° gedämpft. Anschliessend wird auf einer Lisseuse gespült, gewaschen und aviviert, dann getrocknet und in Kannen abgelegt. Man erhält ein gleichmässig in Tiefschwarz gefärbtes Kabel, das sich in gerissenem Zustand zusammen mit ungefärbtem Kabel verarbeiten lässt ohne dasselbe beim Nachdämpfen anzubluten.

Beispiel 6 : 500 kg Velicren (Polyacrylnitril) Kammzug werden nach dem Vigoureuxdruck-Verfahren auf einer geeigneten Anlage mit einem Bedeckungsgrad von 25 % bedruckt. Die wässerige Druckpaste enthält pro Liter

8 g eines säurebeständigen Verdickungsmittels (Typ Kernmehlderivat)
6 g Kokosfettsäurediäthanolamid
1,5 g Entlüftungsmittel
40 g flüssiger Handelsform gemäss Beispiel 1

pH 4-4,5 mit Weinsäure

Anschliessend wird auf einem Dämpfer während 45 Min. mit Sattdampf von 100-102° gedämpft, danach gewaschen, aviviert und getrocknet.

Man erhält auf dem Kammzug einen gleichmässigen, tiefschwarzen und scharf stehenden Druck mit guter Penetration. Ein Anbluten der unbedruckten Abschnitte beim Dämpfen tritt nicht auf.

Beispiel 7 : 300 kg verstrecktes Polyacrylnitril-Nasskabel mit Einzelfibrillen-Titer von 3,3 dtex werden auf einer geeigneten Färbeeinrichtung kontinuierlich gefärbt. Die Färbeflotte von 50° enthält 20 g/l einer flüssigen Handelsform gemäss Beispiel 1 bei einem pH-Wert von 4. Die Tauchzeit des Kabels ist 3 Sek. Die kontinuierliche Dosierung zur Erzielung einer konstanten Konzentration des Farbstoffes in der Färbeflotte beträgt 200 ml/Min, was der gewünschten Farbtiefe von 4 % Schwarzmischung entspricht. Im Anschluss an das Färbebad wird abgequetscht. Dann durchläuft das Kabel Verweil- und Dämpfstrecken bevor gespült, aviviert und getrocknet wird. Man erhält ein tiefschwarz gefärbtes egales Kabel, das die Spül- und Avivagebäder praktisch nicht anschmutzt.

Beispiel 8 : Verfährt man analog den Angaben des Beispiels 1, so können durch geeignetes Mischen von Lösungen der aus folgender Tabelle ersichtlichen Farbstoffe schwarze Flüssigformulierungen erhalten werden, die folgende Zusammensetzung aufweisen :

Tabelle

| Farbstoff | Variante: | A | B | C | E | F | G | H |
|---|---|---|---|---|---|---|---|---|
| I' | Teile | 11.2 | - | 7.8 | - | - | 5.7 | 11.4 |
| I'a | Teile | - | 7.4 | - | 4.8 | 4.4 | 3.6 | - |
| II' | Teile | 5.7 | 6.0 | - | - | - | 6.1 | 5.5 |
| II'a | Teile | - | - | 5.2 | 5.4 | 7.0 | - | - |
| III' | Teile | - | 9.9 | - | - | 9.9 | 9.9 | 5.0 |
| III'a | Teile | - | - | - | - | - | - | 14.5 |
| III'b | Teile | 28.8 | - | 29.9 | 28.8 | - | - | - |
| Essigsäure 80% | Teile | 19.0 | 19.0 | 19.0 | 19.0 | 19.0 | 19.0 | 19.0 |
| Fettalkoholpolyglykoläther | Teile | 1.1 | 1.1 | 1.1 | 1.1 | 1.1 | 1.1 | 1.1 |
| Wasser | Teile | 34.2 | 56.6 | 37.0 | 40.9 | 58.6 | 54.6 | 43.5 |

Farbstoff I'

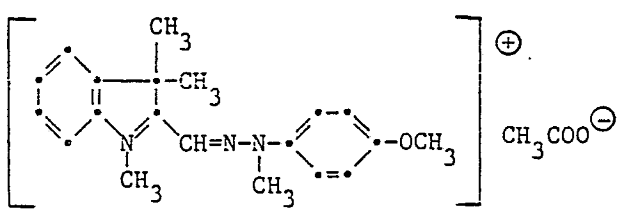

Farbstoff II'

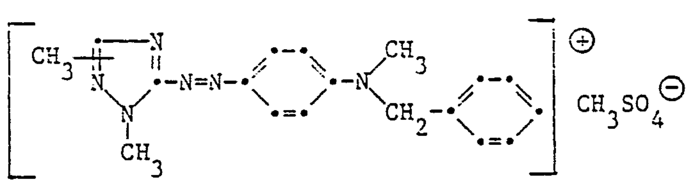

Farbstoff III'

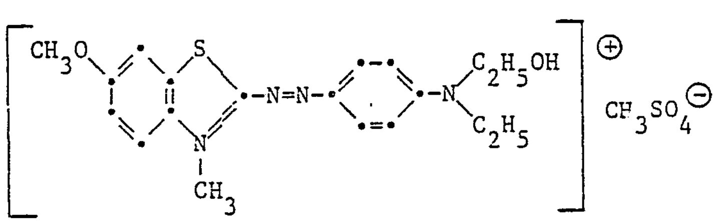

Farbstoff I'a

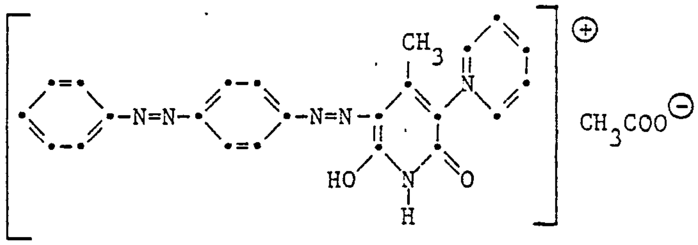

Farbstoff II'a

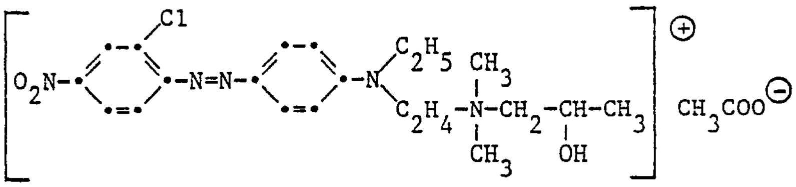

Farbstoff III'a

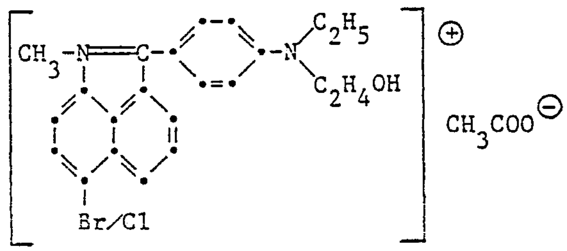

Farbstoff III'b

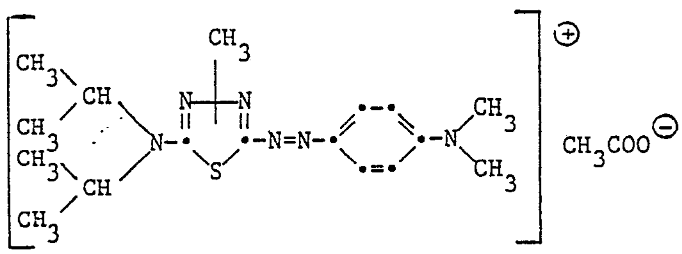

Beispiel 9 : 75 kg Acrilan (Polyacrylnitril) Teppichgarn in Strangform werden auf einem Krantz-Zirkulationsfärbeapparat (ca. 2 500 l) mit 0,5 % einer wässerigen Lösung eines Alkylphenoläthoxylates, 1 % Natriumazetat krist., 5 % Glaubersalz kalz. und 1,5 % (= 1 125 g) einer flüssigen Farbstoffhandelsform gemäss Beispiel 8 Variante H der Tabelle sowie 0,8 % einer wässerigen Lösung von Dodecyldimethylbenzylammoniumchlorid gefärbt. Mit Essigsäure wird ein pH-Wert von 4-4,5 eingestellt. Bei 80° wird mit dem Garn eingefahren und bei wechselnder Flottenzirkulation innerhalb von 30 min auf 100° aufgeheizt und 1 h bei dieser Temperatur gefärbt. Anschliessend wird abgekühlt, gespült, geschleudert und getrocknet. Man erhält ein egal gefärbtes Garn in grauer Farbnuance. Die sehr gute Lichtechtheit ist besser als bei alleiniger Verwendung des Farbstoffes III'a anstelle der Mischung der Farbstoffe III', III'a und III'b.

Beispiel 10 : Gemäss Beispiel 5 werden 1 500 kg Cashmilon (Polyacrylnitril) Spinnkabel in Dunkelgrau gefärbt, wobei 25 g/l flüssige Farbstoff-Handelsform gemäss obigem Beispiel 8/Variante C der Tabelle verwendet werden. Man erhält eine Färbung mit sehr guter Dämpfstabilität.

Beispiel 11 : Eine Flüssigformulierung wird wie folgt hergestellt :
In einem 600 ml Becherglas werden nacheinander vorgelegt :

198,0 g der Flüssigformulierung $A_1$,
111,5 g der Flüssigformulierung B (gemäss Beispiel 1),
67,5 g der Flüssigformulierung $C_1$.

Das Gemisch wird sodann mit 35 g Essigsäure 100 % versetzt und mittels Magnetrührer während einer Stunde bei Raumtemperatur homogenisiert. (pH = ca. 3,3). Nun werden noch 2,5 g eines Emulgators (Basis Fettalkoholpolyglykoläther) zugegeben und eine weitere Stunde verrührt.

Die erhaltene Farbstofflösung wird mit Wasser (85,5 g) auf 500 g gestellt. Anschliessend wird klärfiltriert ; man erhält eine schwarze Flüssigformulierung die folgende Zusammensetzung aufweist :

8,7 Teile Farbstoff der Formel

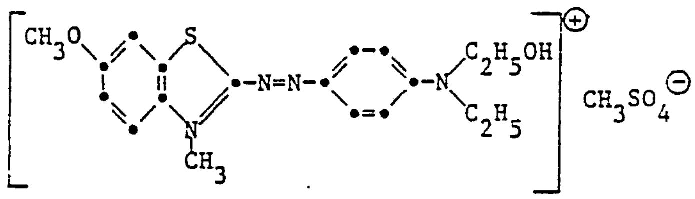

8,9 Teile Farbstoff der Formel

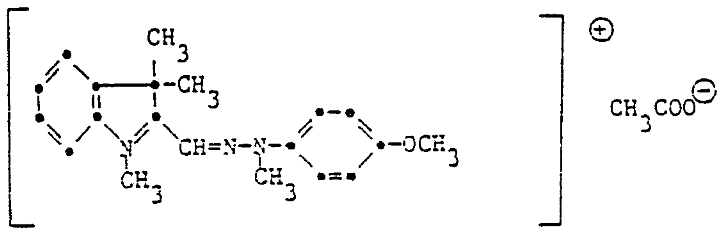

4,5 Teile Farbstoff der Formel

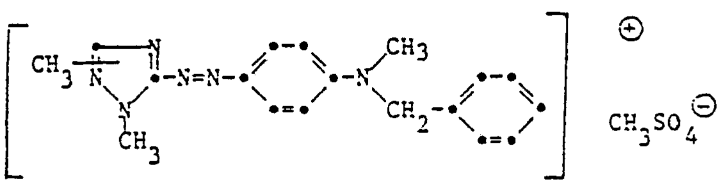

29,0 Teile Essigsäure
1,5 Teile $Na_2SO_4$ + $MgHCH_3SO_4$
45,4 Teile Wasser
1,0 Teile $CH_3COONa$
1,0 Teile Fettalkoholpolyglykoläther

100,0 Teile

Flüssigformulierung $A_1$

21,9 Gew.-% des Farbstoffs der Formel

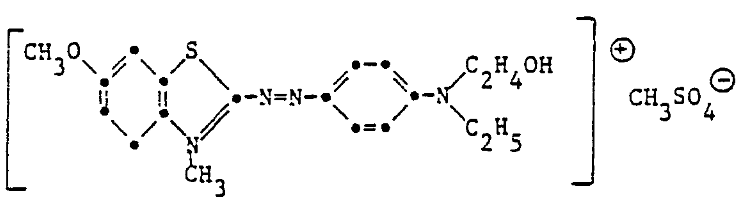

29,0 Gew.-% Essigsäure
1,5 Gew.-% Magnesium Hydrogen-Methylsulfat
2,0 Gew.-% Natriumacetat
1,0 Gew.-% Fettalkoholpolyglykoläther
44,6 Gew.-% Wasser

100,0 Gew.-%

Flüssigformulierung $C_1$

33,6 Gew.-% der Farbstoffs der Formel

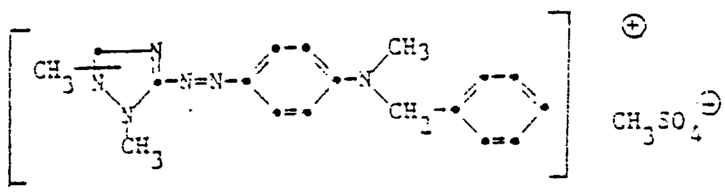

33,9 Gew.-% Wasser,
1,5 Gew.-% $Na_2SO_4$ + $MgHCH_3SO_4$,
1,0 Gew.-% $CH_3COONa$ und
30,0 Gew.-% Essigsäure

100,0 Gew.-%

**Patentansprüche**

1. Flüssige Handelsform, enthaltend kationische Farbstoffe, eine aliphatische Carbonsäure, gegebenenfalls Wasser, organische Lösungsmittel und Zusätze, dadurch gekennzeichnet, dass diese als kationische Farbstoffe eine Mischung von mindestens einer kationischen Gelbkomponente der Formeln

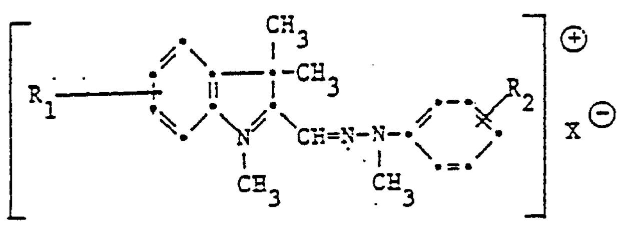

(I)

und/oder

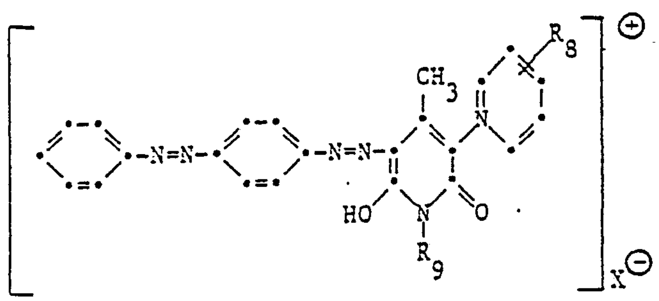

(Ia)

mindestens einer kationischen Rotkomponente der Formeln

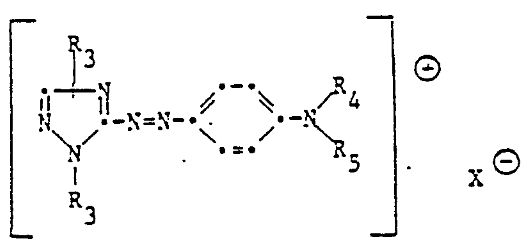

(II)

und/oder

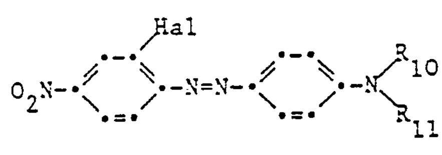

(IIa)

und mindestens einer kationischen Blaukomponente der Formeln

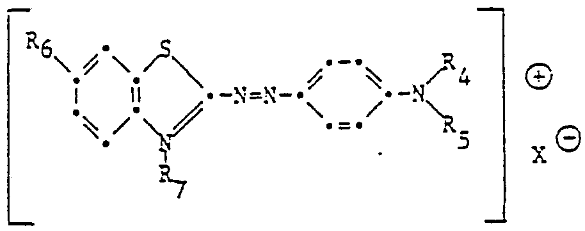

(III)

und/oder

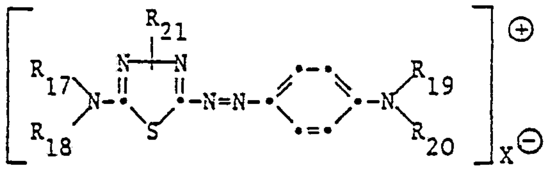

(IIIb)

in welchen Formeln bedeuten :

$R_1$ und $R_2$ unabhängig voneinander Wasserstoff, Halogen, $C_1$-$C_4$-Alkyl oder $C_1$-$C_4$-Alkoxy,
$R_3$ $C_1$-$C_4$-Alkyl,
$R_4$ und $R_5$ unabhängig voneinander gegebenenfalls substituiertes $C_1$-$C_4$-Alkyl
$R_6$ $C_1$-$C_4$-Alkoxy und Acylamino,
$R_7$ $C_1$-$C_4$-Alkyl,
$R_8$ Wasserstoff und Methyl,
$R_9$ Wasserstoff, gegebenenfalls substituiertes $C_1$-$C_6$-Alkyl, Phenyl und Cyclohexyl,
Hal Chlor und Brom,
$R_{10}$ $C_1$-$C_4$-Alkyl,
$R_{11}$ einen Rest der Formeln

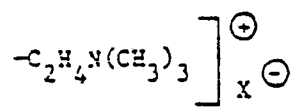

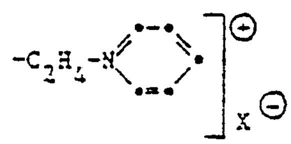

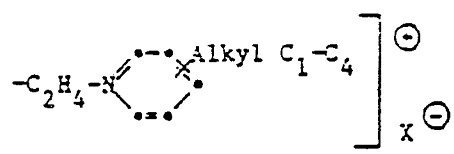

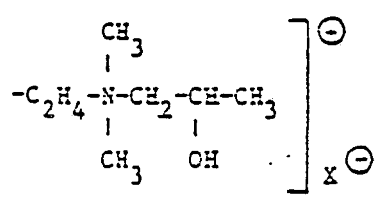

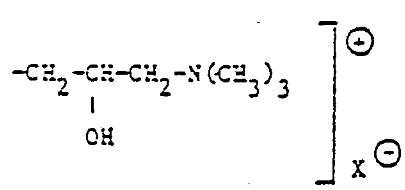

$R_{17}$, $R_{18}$, $R_{19}$ und $R_{20}$ unabhängig voneinander gegebenenfalls substituiertes $C_1$-$C_6$-Alkyl oder $R_{17}$ bildet mit $R_{18}$ unter Einschluss des N-Atoms und gegebenenfalls weiterer heteroatome einen heterocyclischen 5- oder 6-Ring,
$R_{21}$ gegebenenfalls substituiertes $C_1$-$C_3$-Alkyl und
X einen anionischen Rest
sowie gegebenenfalls weitere Zusätze, enthält.

2. Flüssige Handelsform gemäss Anspruch 1, dadurch gekennzeichnet, dass sie als Gelbkomponente einen Farbstoff der Formel I enthält, worin bedeuten :

$R_1$ Wasserstoff, $R_2$ eine $C_1$-$C_4$-Alkoxygruppe, und X einen anionischen Rest ; als Rotkomponente einen Farbstoff der Formel II, worin bedeuten : $R_3$ die Methylgruppe, $R_4$ die Methyl- oder Aethylgruppe, $R_5$ eine durch Phenyl substituierte Methyl- oder Aethylgruppe und X einen anionischen Rest ; und als Blaukomponente einen Farbstoff der Formel III, worin bedeuten : $R_4$ die Methyl- oder Aethylgruppe, $R_5$ eine durch Hydroxyl substituierte Methyl-, Aethyl- oder Propylgruppe, $R_6$ die Methoxygruppe, $R_7$ die Methyl- oder Aethylgruppe und X ein Anion.

3. Flüssige Handelsform gemäss Anspruch 1, dadurch gekennzeichnet, dass sie gesamthaft 20-30 Gew.-% Farbstoff enthält.

4. Flüssige Handelsform gemäss Anspruch 1, dadurch gekennzeichnet, dass sie 10-12 Gew.-% der Gelbkomponente(n), 4-6 Gew.-% der Rotkomponente(n) und 6-12 Gew.-% der Blaukomponente(n) enthält.

5. Flüssige Handelsform gemäss den Ansprüchen 1 bis 4, dadurch gekennzeichnet, dass das Anion X ein Acetat-Methylsulfonat-, Lactat- oder Formiat-Ion bedeutet.

6. Verfahren zur Herstellung der flüssigen Handelsform gemäss Anspruch 1, dadurch gekennzeichnet, dass man wässerige, aliphatische Carbonsäuren enthaltende Lösungen der Gelb-, Rot- und Blaukomponente(n) bei Raumtemperatur miteinander verrührt und gegebenenfalls die weiteren Zusätze und/oder organischen Lösungsmittel vor, während oder nach dem Verrühren zugibt.

7. Verwendung der flüssigen Handelsform gemäss Anspruch 1 oder der gemäss Anspruch 6 erhaltenen Handelsform zum Färben und Bedrucken von Polyacrylnitrilmaterialien, sauer modifizierten Polyester- oder Polyamidmaterialien.

## Claims

1. A liquid preparation containing cationic dyes, an aliphatic carboxylic acid, optionally water, organic solvents and additives, which preparation contains, as cationic dyes, a mixture of at least one cationic yellow component of the formulae

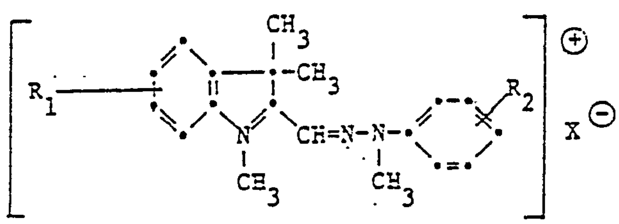

(I)

and/or

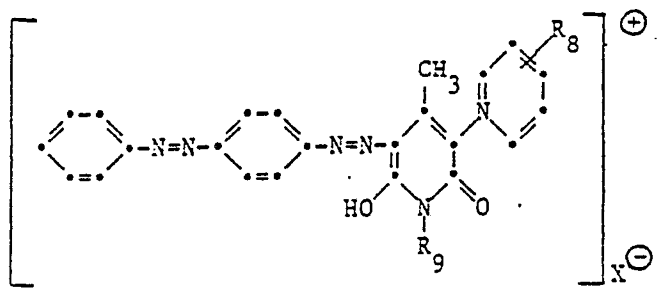

(Ia)

at least one cationic red component of the formulae

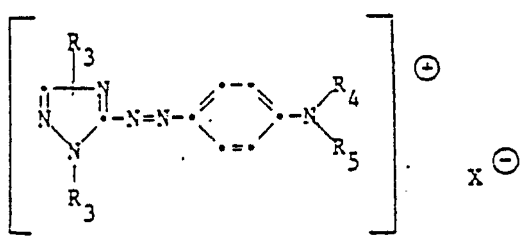

(II)

and/or

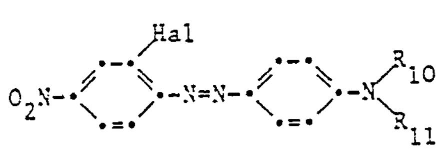

(IIa)

and at least one cationic blue component of the formulae

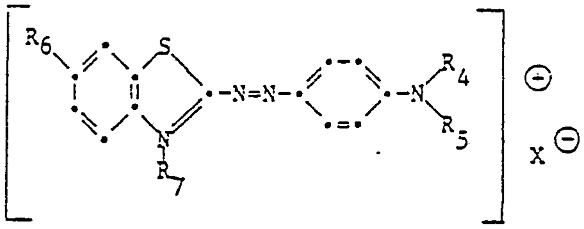

(III)

and/or

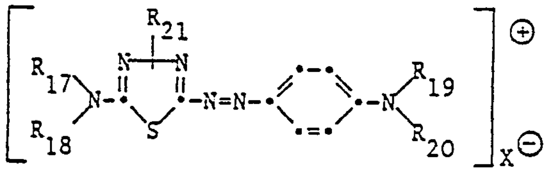

(IIIb)

in which formulae

$R_1$ and $R_2$ independently of one another are each hydrogen, halogen, $C_1$-$C_4$-alkyl or $C_1$-$C_4$-alkoxy,
$R_3$ is $C_1$-$C_4$-alkyl,
$R_4$ and $R_5$ independently of one another are each unsubstituted or substituted $C_1$-$C_4$-alkyl,
$R_6$ is $C_1$-$C_4$-alkoxy or acylamino,
$R_7$ is $C_1$-$C_4$-alkyl,
$R_8$ is hydrogen or methyl,
$R_9$ is hydrogen, unsubstituted or substituted $C_1$-$C_6$-alkyl, or is phenyl or cyclohexyl,
Hal is chlorine or bromine,
$R_{10}$ is $C_1$-$C_4$-alkyl,
$R_{11}$ is a radical of the formulae

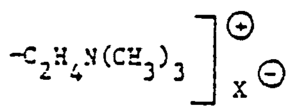

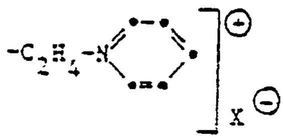

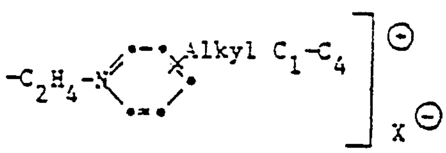

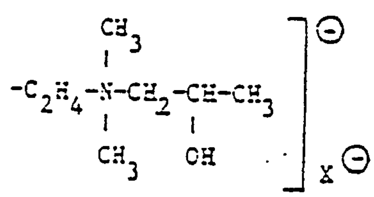

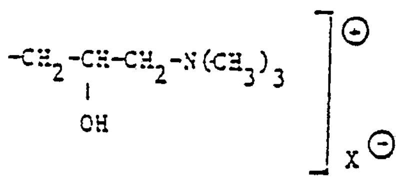

$R_{17}$, $R_{18}$, $R_{19}$ and $R_{20}$ independently of one another are each unsubstituted or substituted $C_1$-$C_6$-alkyl, or $R_{17}$ forms with $R_{18}$, with inclusion of the N atom and optionally further hetero atoms, a heterocyclic 5- or 6-membered ring,
$R_{21}$ is unsubstituted or substituted $C_1$-$C_3$-alkyl, and
X is an anionic radical, and also, if desired, further additives.

2. A liquid preparation according to claim 1, which contains as yellow component a dye of the formula I in which $R_1$ is hydrogen, $R_2$ is a $C_1$-$C_4$-alkoxy group, and X is an anionic radical ; as red component a dye of the formula II in which $R_3$ is the methyl group, $R_4$ is the methyl or ethyl group, $R_5$ is a methyl or ethyl group each substituted by phenyl, and X is an anionic radical ; and as blue component a dye of the formula III in which $R_4$ is the methyl or ethyl group, $R_5$ is a methyl, ethyl or propyl group each substituted by hydroxyl, $R_6$ is the methoxy group, $R_7$ is the methyl or ethyl group, and X is an anion.

3. A liquid preparation according to claim 1, which contains all together 20-30 % by weight of dye.

4. A liquid preparation according to claim 1, which contains 10-12 % by weight of the yellow component(s), 4-6 % by weight of the red component(s) and 6-12 % by weight of the blue component(s).

5. A liquid preparation according to claims 1 to 4, wherein the anion X is an acetate, methylsulfate, lactate or formate ion.

6. A process for producing the liquid preparation according to claim 1, which comprises stirring together at room temperature aqueous solutions of the yellow, red and blue component(s), which solutions contain aliphatic carboxylic acids, and adding, if required, the further additives and/or organic solvents before, during or after the stirring operation.

7. Use of the liquid preparation according to claim 1, or of the preparation obtained according to claim 6, for dyeing and printing polyacrylonitrile materials, and polyester or polyamide materials modified by acid groups.

## Revendications

1. Forme commerciale liquide contenant des colorants cationiques, un acide carboxylique aliphatique, éventuellement de l'eau, des solvants organiques et des additifs, caractérisée en ce qu'elle contient en tant que colorants cationiques un mélange d'au moins un composant cationique jaune de formules

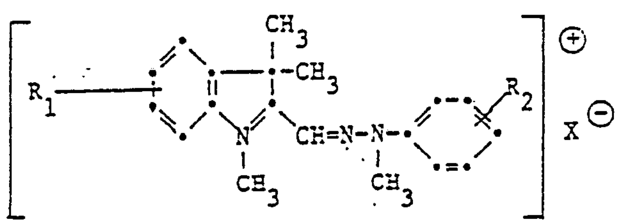

(I)

et/ou

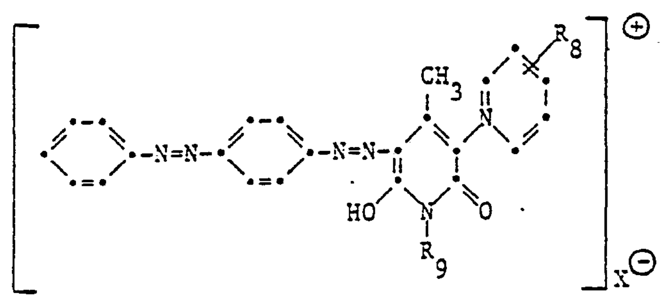

(Ia)

au moins un composant cationique rouge de formules

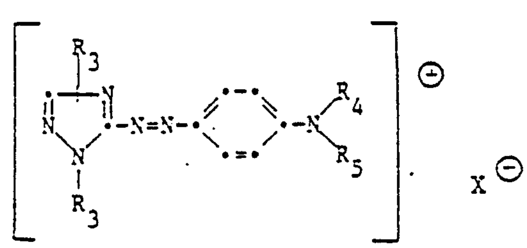

(II)

et/ou

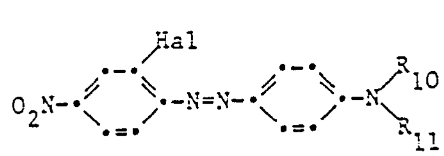

(IIa)

et au moins un composant cationique bleu de formules

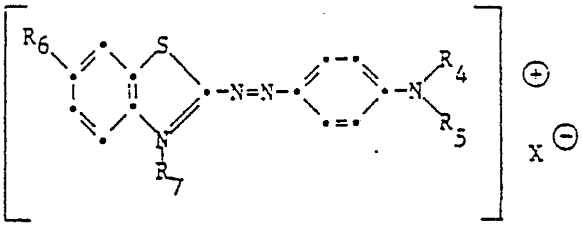

(III)

et/ou

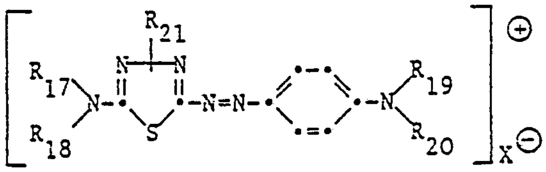

(IIIa)

les symboles utilisés dans ces formules ayant les significations suivantes :

$R_1$ et $R_2$ représentent chacun, indépendamment l'un de l'autre, l'hydrogène, un halogène, un groupe alkyle en $C_1$-$C_4$ ou alcoxy en $C_1$-$C_4$,

$R_3$ représente un groupe alkyle en $C_1$-$C_4$,

$R_4$ et $R_5$ représentent chacun, indépendamment l'un de l'autre, un groupe alkyle en $C_1$-$C_4$ éventuellement substitué,

$R_6$ représente un groupe alcoxy en $C_1$-$C_4$ et un groupe acylamino,

$R_7$ représente un groupe alkyle en $C_1$-$C_4$,

$R_8$ représente l'hydrogène et un groupe méthyle,

$R_9$ représente l'hydrogène, un groupe alkyle en $C_1$-$C_6$ éventuellement substitué, phényle et cyclohexyle,

Hal représente le chlore et le brome,

$R_{10}$ représente un groupe alkyle en $C_1$-$C_4$,

$R_{11}$ représente un groupe de formules

$$\left.-C_2H_4N(CH_3)_3\right]^{\oplus} X^{\ominus}$$

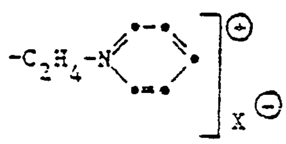

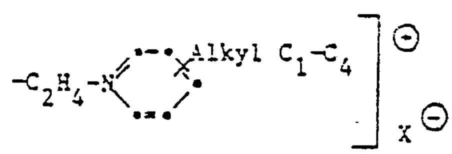

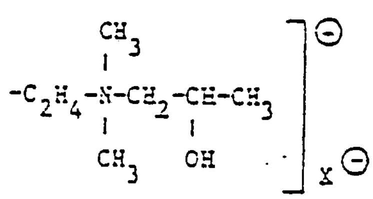

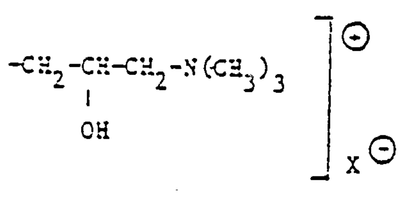

$R_{17}$, $R_{18}$, $R_{19}$ et $R_{20}$ représentent chacun, indépendamment les uns des autres, un groupe alkyle en $C_1$-$C_6$ éventuellement substitué, ou bien $R_{17}$ forme avec $R_{18}$ et l'atome d'azote et le cas échéant d'autres hétéroatomes, un noyau hétérocyclique à 5 ou 6 chaînons,

$R_{21}$ représente un groupe alkyle en $C_1$-$C_3$ éventuellement substitué, et

X représente un groupe anionique,

et le cas échéant d'autres additifs.

2. Forme commerciale liquide selon la revendication 1, caractérisée en ce qu'elle contient en tant que composant jaune un colorant de formule I dans laquelle : $R_1$ représente l'hydrogène, $R_2$ représente un groupe alcoxy en $C_1$-$C_4$ et X un groupe anionique ; en tant que composant rouge un colorant de formule II dans laquelle : $R_3$ représente le groupe méthyle, $R_4$ représente un groupe méthyle ou éthyle, $R_5$ représente un groupe méthyle ou éthyle substitué par un groupe phényle et X représente un groupe anionique ; et en tant que composant bleu, un colorant de formule III dans laquelle : $R_4$ représente un groupe méthyle ou éthyle, $R_5$ représente un groupe méthyle, éthyle ou propyle substitué par un groupe hydroxy, $R_6$ représente le groupe méthoxy, $R_7$ représente un groupe méthyle ou éthyle et X un anion.

3. Forme commerciale liquide selon la revendication 1, caractérisée en ce qu'elle contient au total de 20 à 30 % en poids de colorant.

4. Forme commerciale liquide selon la revendication 1, caractérisée en ce qu'elle contient de 10 à 12 % en poids de composant(s) jaune(s), de 4 à 6 % en poids de composant(s) rouge(s) et de 6 à 12 % en poids de composant(s) bleu(s).

5. Forme commerciale liquide selon les revendications 1 à 4, caractérisée en ce que l'anion X est un anion acétate, méthylsulfate, lactate ou formiate.

6. Procédé de préparation de la forme commerciale liquide selon la revendication 1, caractérisé en ce que l'on mélange entre elles sous agitation, à température ambiante, des solutions aqueuses, contenant des acides carboxyliques aliphatiques, des composant(s) jaune(s), rouge(s) et bleu(s) et le cas échéant, avant, durant ou après ce mélange, on ajoute les autres additifs et/ou les solvants organiques.

7. Utilisation de la forme commerciale liquide selon la revendication 1, ou de la forme commerciale obtenue selon la revendication 6, pour la teinture et l'impression de matières en polyacrylonitrile, de matières en polyesters ou en polyamides à modifications acides.